# EUROPÄISCHE PATENTSCHRIFT

(11) **EP 2 284 029 B1**
(45) Veröffentlichungstag und Bekanntmachung des Hinweises auf die Patenterteilung: **10.09.2014**
(21) Anmeldenummer: 09007501.1
(22) Anmeldetag: 06.06.2009
(51) Int. Cl.: B60J 7/185

(54) **In seiner Offenstellung lagesicherbares Cabriolet-Dach und Cabriolet-Fahrzeug mit einem solchen Dach**
Convertible vehicle roof, lockable in its open position, and convertible vehicle with such a roof
Toit fixable en sa position ouverte pour cabriolet et Véhicule cabriolet doté d'un tel toit

(30) Priorität: 19.07.2008 DE 102008033830
(43) Veröffentlichungstag der Anmeldung: 16.02.2011
(73) Patentinhaber: Valmet Automotive Oy, 23500 Uusikaupunki (FI)
(72) Erfinder: Hollenbeck, Sven, 49492 Westerkappeln (DE); Theuerkauf, Jürgen, 49565 Bramsche (DE)
(74) Vertreter: Kronthaler, Schmidt & Coll.

(56) Entgegenhaltungen:
- DE-A1- 10 144 515
- DE-A1- 10 313 496
- DE-A1-102007 029 813
- DE-U1- 9 416 155

## Beschreibung

Die Erfindung betrifft ein bewegliches Dach für ein Cabriolet-Fahrzeug, das in seiner Offenstellung durch zumindest eine Verriegelung lagesicherbar ist, nach dem Oberbegriff des Anspruchs 1.

Es ist für Cabriolet-Fahrzeuge bekannt, das geöffnete Dach in seiner Lage zu sichern, um damit eine verschleißende Bewegung des geöffneten Dachs zum Beispiel beim Überfahren von Unebenheiten und insbesondere um ein unkontrolliertes Hochschlagen des Daches bei einem Unfall, etwa einem Überschlag, des Fahrzeugs zu verhindern. Die Verriegelung, die zum Beispiel über einen im Schließsinn vorgespannten Fanghaken des Daches bewirkt werden kann, der einen Bolzen der Karosserie oder eines anderen Abschnitts des Daches greift, muss zum Schließen des Daches zunächst gelöst werden. Bei vollautomatischen Dächern geschieht dieses Lösen wie in der DE 103 13 496 A1 motorisch, bei manuell zu bedienenden Dächern hingegen würden solche Motoren nur für die Verriegelung einen sehr hohen Zusatzaufwand bedeuten. Daher kann dort die Verriegelung über zum Beispiel ein Zugseil oder Zuggestänge gelöst werden, das etwa über einen Hebel vom Fahrerplatz aus bedient werden kann. Eine solche Verlegung der Entriegelungsmechanik erfordert erheblichen Montageaufwand bei der Herstellung des Fahrzeugs. Zudem sind Toleranzen im Übergang zwischen Dach und Karosserie problematisch für ein verkantungsfreies Funktionieren der Entriegelung.

Aus der DE 101 44 515 A1 ist ein verstellbares Fahrzeugverdeck bekannt, welches ein vorderes, über eine Verschlusseinrichtung an einem Windschutzscheibenrahmen festlegbares Dachteil aufweist. Weiterhin ist eine an einem Gestängeteil einer Dachkinematik angeordnete Festsetzeinrichtung vorgesehen, mittels welcher in Ablageposition des Fahrzeugverdecks das Gestängeteil gegenüber einer Fahrzeugkarosserie oder gegenüber einem weiteren Gestängeteil arretierbar ist. Die Festsetzeinrichtung umfasst ein als Sperrhaken ausgeführtes Sperrglied, welches schwenkbar an einem zwischen Hauptlenkern angeordneten Koppellenker gehalten ist. Die Festsetzeinrichtung kann entweder automatisiert über die Verschlusseinrichtung oder manuell betätigt werden.

Der Erfindung liegt die Aufgabe zugrunde ein bewegliches Dach zu schaffen, bei welchem eine Fehlbedienung auf einfache Weise ausgeschlossen ist.

Die Erfindung löst dieses Problem durch ein bewegliches Dach für ein Cabriolet-Fahrzeug mit den Merkmalen des Anspruchs 1. Hinsichtlich vorteilhafter Ausgestaltungen der Erfindung wird auf die weiteren Ansprüche 2 bis 12 verwiesen.

Mit der erfindungsgemäßen Zuordnung eines Betätigungselements zum Dach selbst kann die zumindest eine Verriegelung des Daches ohne eine in der Karosserie zu verlegende Mechanik geöffnet werden.

Durch die Unzugänglichkeit des zumindest einen Betätigungselements bei geschlossenem Dach ist eine Fehlbedienung oder Verletzungsgefahr ausgeschlossen.

Hierfür kann das Betätigungselement beispielsweise an einem vorderen Querrahmenteil des Daches derart angeordnet sein, dass es bei geschlossenem Dach unzugänglich und auch optisch verdeckt ist, zum Beispiel dadurch, dass das Betätigungselement bei geschlossenem Dach einem dem vorderen Querrahmenteil benachbart gelegenen Windschutzscheibenrahmen zugewandt ist. Damit ist das Betätigungselement nur bei geöffnetem Dach überhaupt zugänglich. Ein Eingreifen in das Dachgestänge ist in jedem Fall nicht erforderlich, so dass einer Verletzungsgefahr bei der Entriegelung zuverlässig vorgebeugt ist.

Für einen einfachen und preiswerten Aufbau wirkt das Betätigungselement rein mechanisch auf die Verriegelung(en) ein.

So kann durch das Betätigungselement zumindest ein Bowdenzug betätigbar sein. Für eine die Verriegelung lösende Zugkrafteinleitung kann dennoch das Betätigungselement als komfortabel zu bedienender Druckknopf ausgebildet sein, indem durch Druck auf das Betätigungselement ein Rahmen eindrückbar ist, mit dem Umhüllung(en) von einem Bowdenzug oder mehreren Bowdenzügen gegenüber einer Endbefestigung des Bowdenzugs oder der Bowdenzüge wegdrückbar ist oder sind.

Dabei können durch ein einziges Betätigungselement, das für eine gute Zugänglichkeit außermittig im Nahbereich eines Fahrzeugquerrandes gelegen ist, mehrere Verriegelungen geöffnet werden. Diese Verriegelungen können zum Beispiel an beiden äußeren Querrändern gelegen sein und verschiedene Abschnitte von seitlichen Längsrahmenteilen des Daches aneinander halten.

Für eine einfache Bedienbarkeit und vorteilhafte Optik kann das Betätigungselement als großflächiger Knopf ausgebildet sein, dieser kann in Ruhestellung ungefähr bündig in einer Außenfläche eines Rahmenteils des Daches liegen und somit eine hochwertige Anmutung vermitteln. Auch eine optische Hervorhebung, zum Beispiel durch eine LED-Beleuchtung, ist möglich.

Ein bewegliches Dach für ein solches Cabriolet-Fahrzeug ist separat beansprucht.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: ein erfindungsgemäß ausgebildetes Cabriolet-Fahrzeug bei geschlossenem Dach in teilweise aufgebrochener Ansicht von schräg vorne mit einem im vorderen Querträger des Daches angeordneten und hier dem Windschutzscheibenrahmen zugewandten Betätigungselement,
- Fig. 2: das Detail II in Fig. 1 in vergrößert herausgezeichneter Einzelteildarstellung,

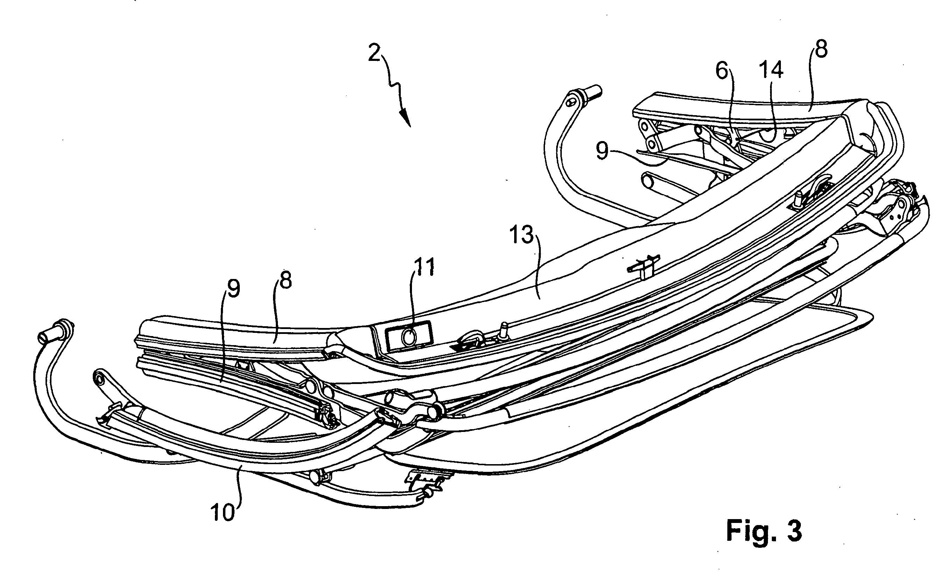

- Fig. 3: das Dach nach Fig. 1 in geöffneter Stellung in perspektivischer Ansicht von schräg hinten,
- Fig. 4: eine ähnliche Ansicht wie Fig. 3, jedoch zur besseren Übersicht ohne einige Verkleidungsteile,
- Fig. 5: das Detail V in Fig. 4 in vergrößert herausgezeichneter Einzelteildarstellung,
- Fig. 6: das Detail VI in Fig. 4 in vergrößert herausgezeichneter Einzelteildarstellung,

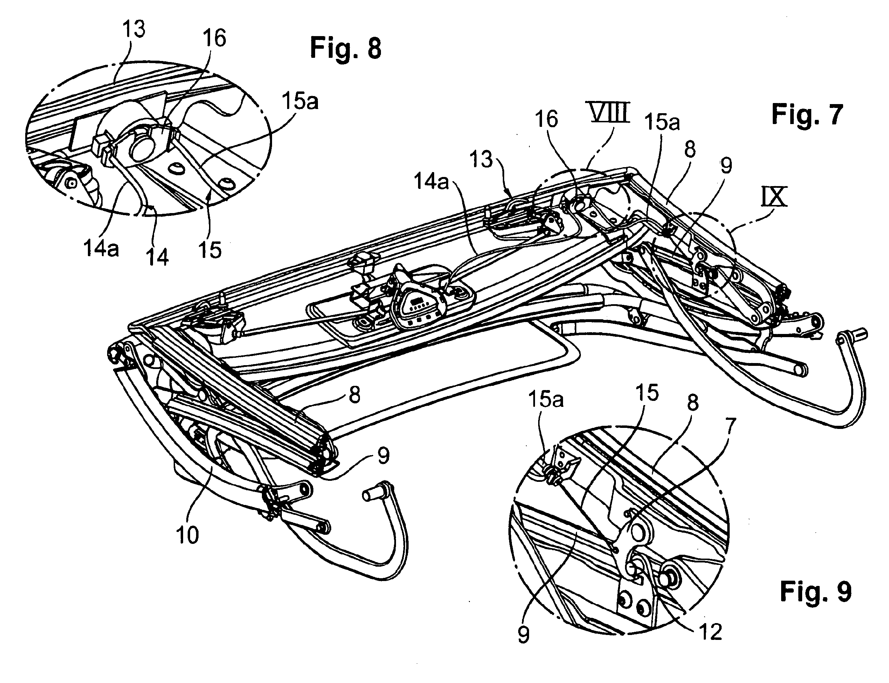

- Fig. 7: das Dach nach Fig. 4 in Ansicht von schräg vorne,
- Fig. 8: das Detail VIII in Fig. 7 in vergrößert herausgezeichneter Einzelteildarstellung,
- Fig. 9: das Detail IX in Fig. 7 in vergrößert herausgezeichneter Einzelteildarstellung,
- Fig. 10: eine Detailansicht eines als Druckknopfes ausgebildeten Bedienelements,
- Fig. 11: eine Detailansicht eines als Zughebels ausgebildeten Bedienelements.

Das hier gezeichnete und erfindungsgemäß ausgebildete Cabriolet-Fahrzeug 1 kann sowohl ein Zweisitzer sein als auch einen größeren Innenraum mit etwa zwei oder mehr Sitzreihen hintereinander aufweisen.

Es umfasst in jedem Fall ein ganz oder teilweise bewegliches Dach 2, das zu seiner Öffnung im rückwärtigen Fahrzeugbereich zumindest teilweise innerhalb der Karosserie 3 ablegbar ist. Das in Fahrtrichtung F vordere Ende des Daches 2 ist mit dem Windschutzscheibenrahmen 4 des Fahrzeugs 1 mittelbar oder unmittelbar zur Sicherung der geschlossenen Dachstellung halterbar. Die Dachbewegung ist hier manuell bewirkbar, so dass Motoren für die Dachbewegung oder die Bewegung von Nebenaggregaten wie etwa Verriegelungen für das geöffnete Dach nicht vorgesehen sein müssen.

Hier ist das Dach insgesamt als sog. Softtop ausgebildet und umfasst einen durchgehenden äußeren Dachbezug 5. Es ist auch möglich, dass zum Beispiel nur ein hinterer Dachteil nach Art eines Landaulet-Fahrzeugs oder nur ein vorderer Dachteil nach Art eines Targa-Fahrzeugs geöffnet werden kann. Bei Öffnung eines vollständigen Daches 2 kann dieses beispielsweise in einer Z-Faltung mit ungewendetem vorderem Dachende oder in einer konventionellen Faltung - wie hier - mit über Kopf gewendetem vorderem Dachende abgelegt werden.

Das geöffnete Dach 2 liegt zumindest teilweise im Heckbereich der Karosserie 3 und kann über diesen nach oben hinausragen. Auch eine vollständige Aufnahme in der Karosserie 3 - evtl. auch unterhalb eines übergreifenden Deckelteils - ist möglich.

In dieser Offenstellung ist das Dach 2 über zumindest eine mechanische Verriegelung 6 lagesicherbar. Im hier gezeichneten Ausführungsbeispiel sind zwei Verriegelungen 6, 7 vorgesehen und jeweils den äußeren Querrändern des Daches 2 zugeordnet. Damit ergeben sich symmetrische Verhältnisse bei der Dachsicherung. Hier sind beispielhaft zwei seitliche Rahmenteile 8, 9 des zusammengefalteten Daches 2 aneinander sicherbar, was ausreichend ist, um eine Dachbewegung insgesamt zu unterbinden. Auch eine Verriegelung des geöffneten Daches 2 an der Karosserie 3 ist möglich. Hier sind insgesamt genau drei seitliche Rahmenteile 8, 9, 10 vorgesehen, von denen die vorderen beiden über die Verriegelungen 6, 7 aneinander sicherbar sind. Diese Anordnung ist nur beispielhaft.

Durch die vollständige Anordnung der Verriegelungen 6, 7 innerhalb des Daches 2 müssen jedoch irgendwelche Toleranzen an der Schnittstelle zwischen Dach 2 und Karosserie 3 nicht beachtet werden; die Verriegelungen 6, 7 können, da mitsamt ihrer unten noch näher beschriebenen Bedieneinheit 11 dem Dach 2 zugeordnet, unabhängig vom Einbau in die Karosserie 3 vorab auf Funktion getestet werden.

Die Verriegelungen 6, 7 umfassen hier jeweils Fanghaken, die im Schließsinn, in dem sie jeweils einen Bolzen 12 greifen, vorgespannt sind, zum Beispiel jeweils über eine Spiralfeder.

Zum Lösen der zumindest einen - hier zwei - Verriegelungen 6, 7 ist zumindest ein am Dach 2 angeordnetes Betätigungselement 11 vorgesehen. Hier ist zum gleichzeitigen Lösen beider Verriegelungen 6, 7 nur ein einziges gemeinsames Betätigungselement 11 vorgesehen, was die Bedienung vereinfacht.

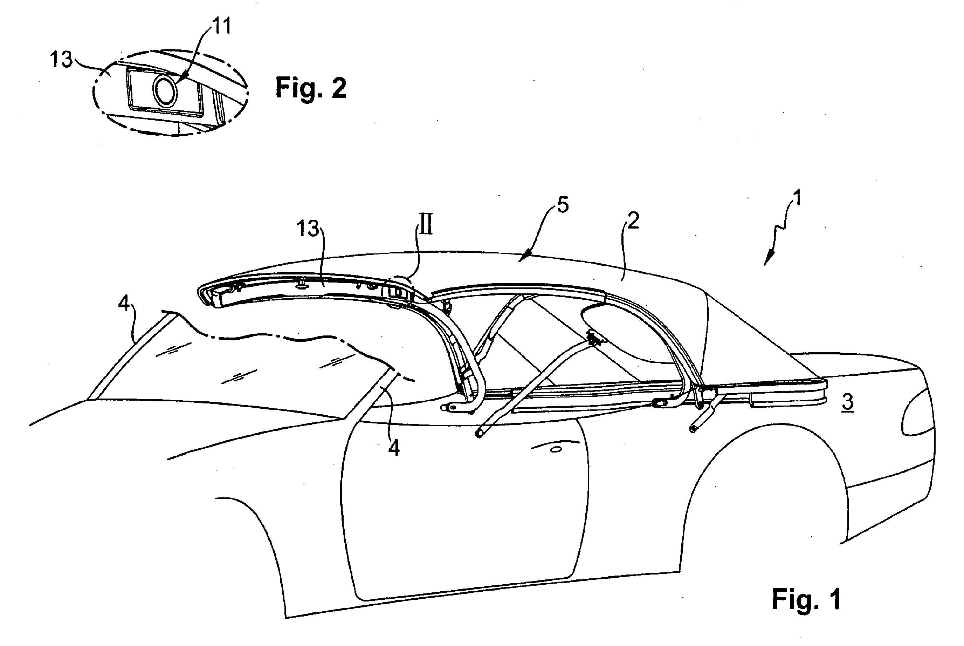

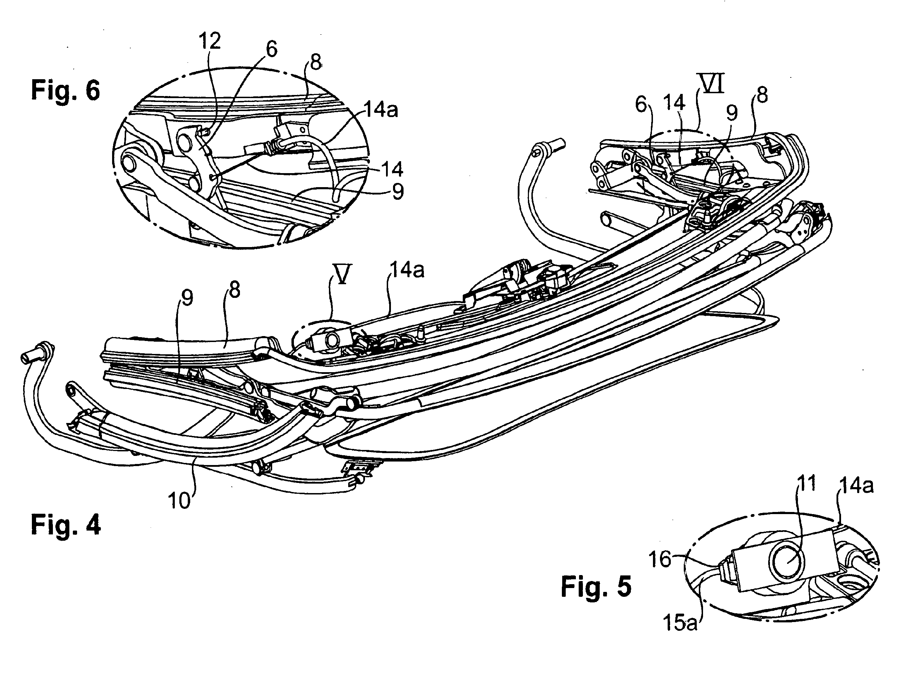

Gemäß der Darstellung nach Fig. 1 kann das zumindest eine Betätigungselement 11 eine insbesondere großflächige und ggf. optisch hervorgehobene - zum Beispiel auch beleuchtete - Drucktaste umfassen. Diese kann bei geschlossenem Dach unzugänglich sein, so dass eine Fehlbedienung ausgeschlossen ist. Hierfür ist das Betätigungselement 11 an einem vorderen Querrahmenteil 13 des Daches 2 angeordnet, und zwar derart, dass es bei geschlossenem Dach 2 dem diesem vorderen Querrahmenteil 13 benachbart gelegenen Windschutzscheibenrahmen 4 zugewandt ist. Ein Eingriff in den Spalt zwischen diesen Teilen 4, 13 ist dabei nicht möglich. Bei geöffnetem Dach 2 (sh. z. B. Fig. 4) ist hingegen der Betätigungsknopf 11 offen zugänglich und optisch auffällig gelegen.

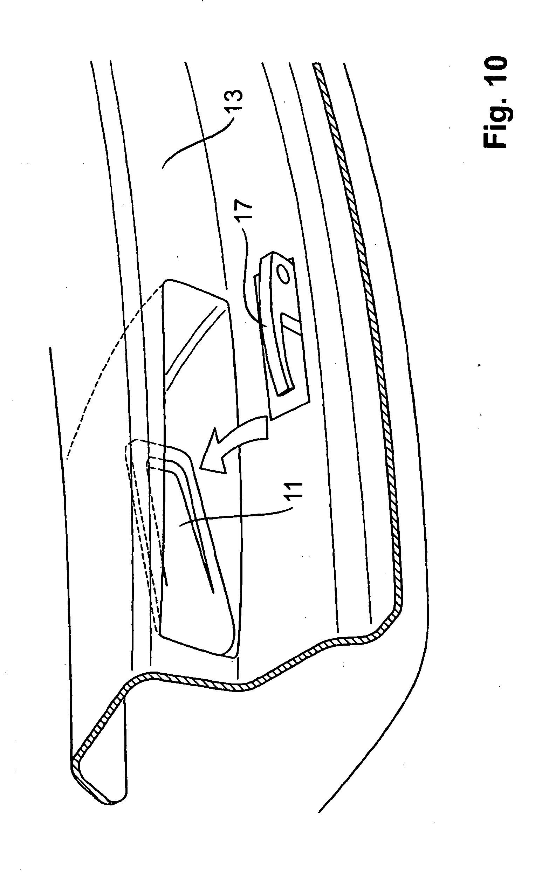

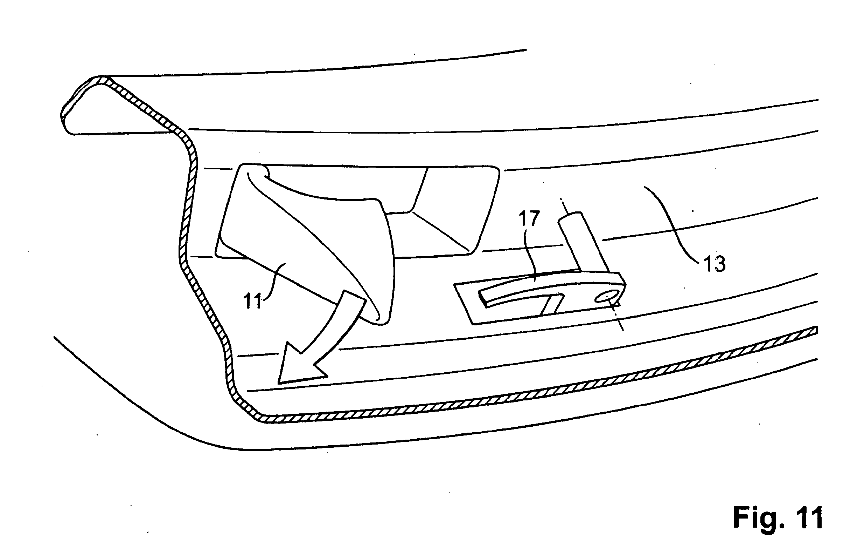

Für eine einfache und gewichtssparende Ausbildung wirkt das Betätigungselement 11 hier rein mechanisch auf die Verriegelung(en) 6, 7 ein, wofür in diesem Fall Bowdenzüge 14, 15 als Kraftvermittler vorgesehen sind. Dabei kann zum Anziehen der Bowdenzüge 14, 15 das Betätigungselement wie in Fig. 10 als Drucktaste oder wie in Fig. 11 als Zughebel ausgebildet sein.

Bei der Ausbildung als Drucktaste ist durch Druck auf das Betätigungselement 11 ein Rahmen 16 lotrecht von der Vorderfläche des Betätigungselements 11 wegdrückbar. Dadurch werden Umhüllungen 14a, 15a von den hier zwei Bowdenzügen 14, 15 gegenüber deren Endbefestigung weggedrückt, um damit die erforderliche Relativbewegung erreichen zu können und die Verriegelungen 6, 7 gegen die Federkraft öffnen und die Bolzen 12 freigeben zu können. Die Rahmenteile 8, 9 sind dann nicht mehr gegeneinander gehalten, sondern das Dach 2 kann in Relativbewegung seiner Teile gegeneinander wieder in seinen Schließzustand gelangen.

In den Ausführungsbeispielen ist das Betätigungselement 11 als großflächiger Knopf ausgebildet, der in seiner Ruhestellung ungefähr bündig und optisch elegant in der vorderen Außenfläche des vorderen Querrahmenteils 13 des Daches 2 liegt. Der Knopf kann wie in Fig. 10 um eine Achse eingeschwenkt werden oder auch einen insgesamt axial eindrückbaren Bedienknopf ausbilden.

Auch kann das Betätigungselement seitlich versetzt neben solchen Teilen 17, zum Beispiel Hakenteilen, liegen, mit denen das Dach 2 am Windschutzscheibenrahmen 4 halterbar ist.

Hier ist das Betätigungselement zur linken Fahrzeugseite versetzt, so dass es bei einem ungewendeten vorderen Dachteil evtl. vom Fahrerplatz aus oder bei - wie hier - gewendetem vorderem Dachteil vom ausgestiegenen Fahrer mit möglichst kurzen Wegen bedient werden kann.

Ein Eingreifen in seitliche Gestängeteile des Daches 2 ist dabei in jedem Fall nicht erforderlich; eine Verletzungsgefahr ist somit vermieden.

## Patentansprüche

1. Bewegliches Dach (2) für ein Cabriolet-Fahrzeug (1), welches in eine im hinteren Fahrzeugbereich gelegene Offenstellung bewegbar ist, und das in der Offenstellung über zumindest eine mechanische Verriegelung (6;7) lagesicherbar ist, wobei zum Lösen der zumindest einen Verriegelung (6;7) zumindest ein am Dach (2) angeordnetes Betätigungselement (11) vorgesehen ist, **dadurch gekennzeichnet,**
**dass** das zumindest eine Betätigungselement (11) bei geschlossenem Dach (2) unzugänglich ist.

2. Bewegliches Dach nach Anspruch 1,
**dadurch gekennzeichnet,**
**dass** das Betätigungselement (11) an einem vorderen Querrahmenteil (13) des Daches angeordnet ist.

3. Bewegliches Dach nach Anspruch 2,
**dadurch gekennzeichnet,**
**dass** das Betätigungselement (11) bei geschlossenem Dach (2) einem dem vorderen Querrahmenteil (13) benachbart gelegenen Windschutzscheibenrahmen (4) zugewandt ist.

4. Bewegliches Dach nach einem der Ansprüche 1 bis 3,
**dadurch gekennzeichnet,**
**dass** das Betätigungselement (11) rein mechanisch auf die Verriegelung(en) (6;7) einwirkt.

5. Bewegliches Dach nach Anspruch 4,
**dadurch gekennzeichnet,**
**dass** durch das Betätigungselement (11) zumindest ein Bowdenzug (14;15) betätigbar ist.

6. Bewegliches Dach nach einem der Ansprüche 1 bis 5,
**dadurch gekennzeichnet,**
**dass** durch Druck auf das Betätigungselement (11) ein Rahmen (16) eindrückbar ist, mit dem Umhüllung(en) (14a;15a) von einem Bowdenzug oder mehreren Bowdenzügen (14;15) gegenüber einer Endbefestigung des Bowdenzugs oder der Bowdenzüge (14;15) relativbeweglich ist oder sind.

7. Bewegliches Dach nach einem der Ansprüche 1 bis 6,
**dadurch gekennzeichnet,**
**dass** durch ein einziges Betätigungselement (11) mehrere Verriegelungen (6;7) entriegelbar sind.

8. Bewegliches Dach nach einem der Ansprüche 1 bis 7,
**dadurch gekennzeichnet,**
**dass** das Betätigungselement (11) als großflächiger Knopf ausgebildet ist.

9. Bewegliches Dach nach einem der Ansprüche 1 bis 8,
**dadurch gekennzeichnet,**
**dass** das Betätigungselement (11) in Ruhestellung ungefähr bündig in einer Außenfläche eines Rahmenteils (13) des Daches (2) liegt.

10. Bewegliches Dach nach einem der Ansprüche 1, bis 9,
**dadurch gekennzeichnet,**
**dass** das Betätigungselement (11) optisch hervorgehoben ist.

11. Bewegliches Dach nach einem der Ansprüche 1 bis 10,
**dadurch gekennzeichnet,**
**dass** durch die Verriegelung (6;7) mehrere seitliche Rahmenteile (8;9;10) des zusammengelegten Daches (2) gegeneinander sicherbar sind.

12. Cabriolet-Fahrzeug (1) mit einem beweglichen Dach (2) nach einem der Ansprüche 1 bis 11.

## Claims

1. Movable roof (2) for a convertible vehicle (1), which roof is movable to an open position located at the rear of the vehicle and can be positionally secured in the open position by at least one mechanical locking device (6;7), there being provided at least one actuating element (11) arranged at the roof (2) to release the at least one locking device (6;7), **characterised in that** the at least one actuating element (11) is inaccessible when the roof (2) is closed.

2. The movable roof according to claim 1, **characterised in that** the actuating element (11) is arranged at a front transverse frame part (13) of the roof.

3. The movable roof according to claim 2, **characterised in that**, when the roof (2) is closed, the actuating element (11) faces a windscreen frame (4) located adjacent to the front transverse frame part (13).

4. The movable roof according to any one of claims 1 to 3, **characterised in that** the actuating element (11) acts purely mechanically on the locking device(s) (6;7).

5. The movable roof according to claim 4, **characterised in that** at least one Bowden cable (14;15) can be actuated by the actuating element (11).

6. The movable roof according to any one of claims 1 to 5, **characterised in that** by pressing the actuating element (11) a frame (16) can be pushed in by which a sheath(s) (14a;15a) of one or a plurality of Bowden cables (14;15) can be moved in relation to an end fixture of the Bowden cable or Bowden cables (14;15).

7. The movable roof according to any one of claims 1 to 6, **characterised in that** a plurality of locking devices (6;7) can be unlocked by one single actuating element (11).

8. The movable roof according to any one of claims 1 to 7, **characterised in that** the actuating element (11) is provided as a large button.

9. The movable roof according to any one of claims 1 to 8, **characterised in that**, in its resting position, the actuating element (11) lies approximately flush in an outer surface of a frame part (13) of the roof (2).

10. The movable roof according to any one of claims 1 to 9, **characterised in that** the actuating element (11) is optically highlighted.

11. The movable roof according to any one of claims 1 to 10, **characterised in that** the locking device (6;7) allows a plurality of lateral frame parts (8;9;10) of the folded roof (2) to be secured against each other.

12. A convertible vehicle (1) with a movable roof (2) according to any one of claims 1 to 11.

## Revendications

1. Toit déplaçable (2) pour un véhicule cabriolet (1), ledit toit étant déplaçable vers une position ouverte située à l'arrière dudit véhicule et ledit toit pouvant être bloqué en position ouverte par au moins un dispositif de verrouillage mécanique (6;7) pour le déverrouillage duquel on prévoit au moins un élément d'actionnement (11) disposé au toit (2), **caractérisé en ce que** ledit au moins un élément d'actionnement (11) est inaccessible lorsque le toit (2) est fermé.

2. Toit déplaçable selon la revendication 1, **caractérisé en ce que** l'élément d'actionnement (11) est disposé à un élément de cadre transversal avant (13) du toit.

3. Toit déplaçable selon la revendication 2, **caractérisé en ce que**, lorsque le toit (2) est fermé, l'élément d'actionnement (11) est tourné vers un cadre de pare-brise (4) adjacent à l'élément de cadre transversal avant (13).

4. Toit déplaçable selon l'une quelconque des revendications 1 à 3, **caractérisé en ce que** l'élément d'actionnement (11) agit sur le(s) dispositif(s) de verrouillage (6;7) de manière purement mécanique.

5. Toit déplaçable selon la revendication 4, **caractérisé en ce que** l'élément d'actionnement (11) permet d'actionner au moins un câble Bowden (14;15).

6. Toit déplaçable selon l'une quelconque des revendications 1 à 5, **caractérisé en ce qu'**une pression sur l'élément d'actionnement (11) permet de pousser un cadre (16) vers l'intérieur, ce cadre (16) permettant de déplacer une ou plusieurs gaines (14a;15a) d'un ou plusieurs câbles Bowden (14;15) par rapport à une fixation finale du ou des câble(s) Bowden (14;15).

7. Toit déplaçable selon l'une quelconque des revendications 1 à 6, **caractérisé en ce que** plusieurs dispositifs de verrouillage (6;7) peuvent être déverrouillés par un seul élément d'actionnement (11).

8. Toit déplaçable selon l'une quelconque des revendications 1 à 7, **caractérisé en ce que** l'élément d'actionnement (11) est réalisé sous forme d'un bouton à grande surface.

9. Toit déplaçable selon l'une quelconque des revendications 1 à 8, **caractérisé en ce que**, dans sa position de repos, l'élément d'actionnement (11) est fait affleurer environ dans une face extérieure d'un élément de cadre (13) du toit (2).

10. Toit déplaçable selon l'une quelconque des revendications 1 à 9, **caractérisé en ce que** l'élément d'actionnement (11) est marqué optiquement.

11. Toit déplaçable selon l'une quelconque des revendications 1 à 10, **caractérisé en ce que** le dispositif de verrouillage (6;7) permet de bloquer, les uns par rapport aux autres, plusieurs éléments de cadre latéraux (8;9;10) du toit (2) escamoté.

12. Véhicule cabriolet (1) avec un toit déplaçable (2) selon l'une quelconque des revendications 1 à 11.
